## Europäisches Patentamt

## European Patent Office

## Office européen des brevets

(11) Numéro de publication: **0 013 854**
**B1**

(12) # FASCICULE DE BREVET EUROPEEN

(45) Date de publication du fascicule du brevet:
**25.04.84**

(51) Int. Cl.³: **B 65 G 5/00,** F 17 C 3/00,
E 21 F 17/16

(21) Numéro de dépôt: **79401051.2**

(22) Date de dépôt: **20.12.79**

(54) **Procédé et dispositif de sécurité pour stockage souterrain d'un fluide sous pression.**

(30) Priorité: **28.12.78 FR 7836633**

(43) Date de publication de la demande:
**06.08.80 Bulletin 80/16**

(45) Mention de la délivrance du brevet:
**25.04.84 Bulletin 84/17**

(84) Etats contractants désignés:
**AT BE CH DE GB IT LU NL SE**

(73) Titulaire: **Société française de stockage géologique "GEOSTOCK" (Société à responsabilité limitée), Tour Aurore - Cédex No 5, F-92080 Paris La Defense (FR)**

(72) Inventeur: **Berezoutzky, Georges, 13 rue de Nangis, F-77240 Cesson (FR)**

(74) Mandataire: **Pinguet, André, CAPRI 28 bis, avenue Mozart, F-75016 Paris (FR)**

(56) Documents cités:
**DE - A - 2 135 544**
**FR - A - 2 119 805**
**FR - A - 2 372 753**
**US - A - 2 855 757**
**US - A - 2 981 071**

**INTERNATIONAL CONSTRUCTION, vol. 17, no. 1, janvier 1978, Haywards Heath GB ANON: "Rockstore'77 Sweden unearths her underground techniques", pages 58-65**
**ERDOEL UND KOHLE, vol. 30, no. 8, août 1977, Leinfelden, DE A. CLAESSON & H. BERTLAND: "Unterirdische Speicheranlagen für Erdöl und Gas", pages 357-361**

# Procédé et dispositif de sécurité pour stockage souterrain d'un fluide sous pression

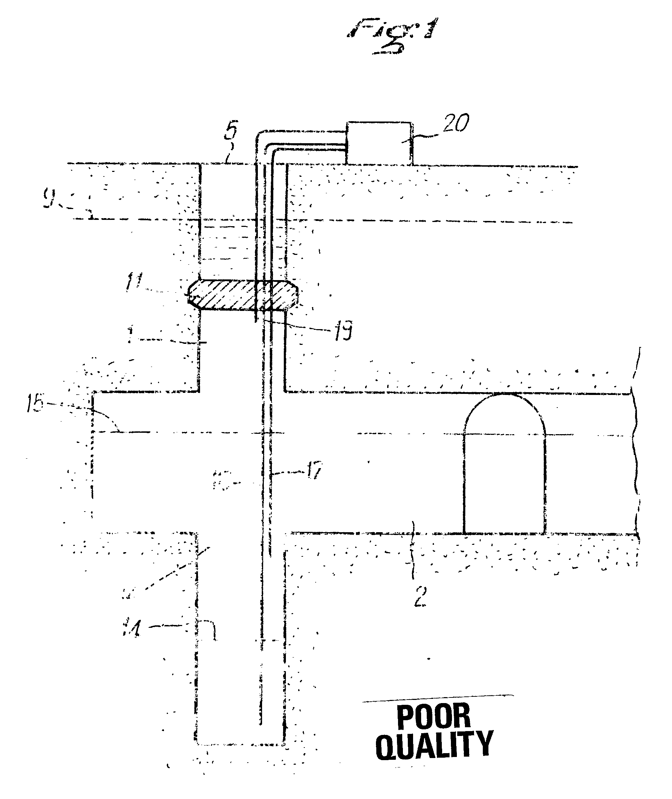

L'invention a pour objet un procédé et un dispositif de sécurité pour un stockage souterrain d'un fluide sous pression, par exemple d'hydrocarbures, et plus particulièrement de gaz liquéfié. La figure 1 des dessins ci-joints représente très schématiquement un exemple typigue d'un tel stockage. Bien entendu, la nature du gaz, les conditions diverses, les cotes de profondeurs et les dimensions peuvent varier dans certaines limites, cet exemple n'étant donné que pour faire ressortir les problèmes auxquels les exploitants sont confrontés. En outre, pour limiter les dimensions du dessin, sans trop restreindre les parties intéressantes, les proportions ne sont pas respectées.

Dans son ensemble, l'exemple de stockage représenté sur la figure 1 comprend un puits 1 et un ensemble 2 de galeries pouvant avoir toute disposition convenable, telle qu'en dents de peigne, en galeries parallèles, ou chambres et piliers.

Ce puits est couvert par une dalle en béton 5, surplombant le niveau 9 de la nappe phréatique. L'isolement du stockage avec l'atmosphère est réalisé dans le puits de jonction, au-dessus des galeries ou prés de la surface par un bouchon en béton 11, et le puits se prolonge en-dessous du radier des galeries par un puisard 12. La partie du puits au-dessus du bouchon 11 peut être remplie d'eau (niveau 9). Le puisard collecte l'eau d'exhaure, jusqu'au niveau repéré 14. Dans d'autres cas, le puits est équipé d'un tubage étanche dont l'extrêmité supérieure est terminée par un bouchon métallique soudé et résistant à la pression. C'est à travers ce bouchon que passent toutes les tuyauteries de liaison entre fond et surface. Les galeries sont destinées au stockage du produit, en particulier l'hydrocarbure. Lorsque les conditions d'état le permettent, une phase du produit est liquide jusqu'au niveau 15, la phase gazeuse occupe la partie haute du stockage, notamment la partie du puits sous le bouchon d'isolement.

Un certain nombre de tubes ou colonnes de jonction (casings) 17, 18, 19 descendent de la surface à des niveaux divers dans le stockage et sont connectés à l'extérieur à des installations schématiquement représentées en 20. L'eau d'exhaure s'écoule en permanence dans les galeries, ruisselle sur le radier et se rassemble dans le puisard 12, d'où elle est pompée par une pompe immergée de façon à maintenir un niveau convenable, comme il sera expliqué ci-après.

Le tube 17 contient le dispositif de pompage du produit stocké et le tube 18 contient le dispositif de pompage d'eau d'exhaure. La pompe d'eau est asservie de façon que l'interface 14 eau-hydrocarbure reste entre les ouvertures d'aspiration des tubes 17 et 18. Si le niveau d'eau monte et si l'eau noie l'aspiration du tube 17, on ne pourra plus pomper le produit (hydrocarbure); sie le niveau baissait trop, la pompe d'eau véhiculerait le produit stocké (hydrocarbure). Les tubes 17 et 18 sont composés d'une gaine fixe et contiennent un tube de refoulement qui supporte le groupe moto pompe avec les commandes électriques ou hydrauliques nécessaires à l'opération des moteurs, pompes, vannes ou autres accessoires.

Le produit ou l'hydrocarbure peut être du propane, par exemple à 15° C, ce qui correspond à une pression absolue de 8,5 bar (85 · 10⁴ pascals). La température, c'est-à-dire la pression d'équilibre, peut varier en fonction de la température et du débit du propane introduit, de la vitesse d'extraction (déstockage) et de l'exhaure.

Il est nécessaire de prévoir un tube (19) d'évent du stockage, dont l'ouverture soit proche du sommet du stockage. L'ensemble peut comporter en outre différents tubes non représentés, renfermant des sondes diverses, destinées à régler le fonctionnement des asservissements et un tube d'introduction de l'hydrocarbure (stockage).

Dans un tel stockage, il est important d'éviter tout risque d'éruption de gaz et surtout de liquide, c'est-à-dire une sortie massive d'hydrocarbure, qui pourrait donner lieu à des incendies et des explosions d'ampleur catastrophique.

La présente invention a essentiellement pour objet d'assurer la sécurité d'un stockage du genre en question. Selon l'invention, au cas où il ne peut être apporté remède en temps voulu à la panne d'un appareil d'exploitation quelconque ou à la rupture accidentelle ou provoquée des installations de surface, on isole le stockage par fermeture de tout tube pénétrant dans une phase liquide par remplissage d'eau jusqu'au niveau d'équilibre hydrostatique.

Selon une autre caractéristique de l'invention, pour obtenier l'isolement et la mise en sommeil de l'installation, l'on amène le niveau de l'eau dans le fond du stockage au-dessus des ouvertures inférieures des tubes, à une hauteur suffisante pour permettre le remplissage des tubes par refoulement de l'eau sous l'effet de la pression dans le stockage. En cas de rupture, il en résulterait une remontée de l'eau dans les colonnes de pompes, l'eau atteignant un niveau d'équilibre hydrostatique avec l'intérieur du stockage, inférieur au niveau du stockage dans le sol.

La sécurité ainsi réalisée est absolue puisque c'est la pression naturelle de l'eau dans les colonnes qui équilibre la pression dans le stockage. Aucun élément n'est soumis à un effort de pression.

On peut ainsi conserver le stockage très longtemps sans risque, sans fournir aucune énergie et sans sortir le produit stocké (déstockage), d'où l'expression »mise en sommeil« de l'installation. Il est cependant possible de recevoir du produit (stockage) dans la cavité.

Selon l'invention, un dispositif de stockage souterrain pour un produit fluide sous pression comportant une cavité souterraine avec un puisard à la partie inférieure de ladite cavité et des tubes d'exploitation établissant des communications entre la cavité et un niveau supérieur au plafond de celle-ci, les extrémités inférieures des tubes débouchant dans le puisard, est caractérisé en ce que le volume de la partie du puisard située au-dessus des extrémités inférieures des tubes est supérieur au volume des tubes compris entre les extrémités inférieures et le niveau d'équilibre hydrostatique pour la pression prévue dans le stockage.

Selon une autre caractéristique de l'invention, toutes les connexions entre stockage et extérieur sont garnies de vannes de sécurité placées en tête, à l'exception des colonnes d'eau, pour lesquelles l'ouverture ou la destruction d'une vanne en surface n'a d'autre effet que le déplacement de l'eau dans la colonne jusqu'à l'équilibre hydrostatique.

Selon une autre caractéristique de l'invention, les vannes de sécurité sont disposées dans une cave des sécurité, construite en tête du puits sous le niveau du sol. La cave est située sous la dalle recouvrant le puits et peut avoir pour plancher un caillebotis ou analogue. Une trappe de visite très lourde, qui ne peut être manipulée qu'au moyen de grues ou engins spéciaux, est prévue dans la dalle; on pourra prévoir des moyens d'avertissement déclenchés par l'ouverture de la trappe. Comme la nécessité de pouvoir remonter les pompes d'aspiration d'hydrocarbure imposerait une hauteur de cave supérieure à la longueur des éléments à manipuler et des moyens peu économiques, si cela devait se faire dans la cave de sécurité, les gaines des aspirations d'hydrocarbure débouchent directement à la surface, en passant à travers la dalle; les vannes de sécurité correspondantes seraient alors à l'extérieur et exposées. Pour pouvoir assurer avec sécurité l'isolement du stockage en cas d'accident à l'extérieur, il est prévu selon l'invention de garnir les gaines de pompage du produit d'une vanne de sécurité à l'extrêmité inférieure des gaines, à l'aspiration des pompes.

Selon l'invention, les vannes d'obturation sont du type dans lequel l'obturateur est disposé de façon à être maintenu fermé sous l'effet de la pression dans le stockage et sous l'effet d'un ressort. Ainsi, l'ouverture de la vanne est réalisée en déplaçant l'obturateur contre la pression d'un ressort de rappel et contre la pression dans le stockage.

Par conséquent, en cas de panne des dispositifs de manoeuvre de l'obturateur, les vannes resteront fermées sous l'effet des ressorts et de la pression intérieure du stockage; le stockage sera isolé. De telles vannes sont connues.

Selon une autre caractéristique de l'invention, le tube d'évent gazeux est connecté d'une part à une vanne de régulation, de façon que celle-ci s'ouvre si la pression dans le stockage dépasse une valeur préréglée, par exemple 7,6 bar (76 · 10⁴ pascals) relatif, pour le propane et d'autre part vers l'aspiration d'une installation frigorifique utilisant le gaz lui-même comme générateur de frigories après réfrigération et détente dans le stockage; cette extraction calorifique a pour effet d'abaisser la température donc de réduire la pression du stockage.

L'invention a également pour objet des modes de réalisation des étanchéités des différents tubes de connexion entre les installations de surface et le stockage.

D'autres caractéristiques de l'invention apparaîtront au cours de la description qui va suivre, donnée à titre d'exemple non limitatif, en regard des dessins ci-joints, sur lesquels:

- la figure 1 est une vue schématique d'un stockage souterrain de gaz liquéfié, de type classique;
- la figure 2 est une vue analogue à la figure 1, représentant un stockage souterrain selon l'invention;
- la figure 3 est une vue schématique des dispositions des aspirations des pompes d'eau et de produit dans la fosse du puits;
- la figure 4 est une vue en coupe à plus grande échelle du dispositif de soutirage d'hydrocarbure; et,
- la figure 5 est une vue en coupe d'une obturation étanche d'une suspension de sondes.

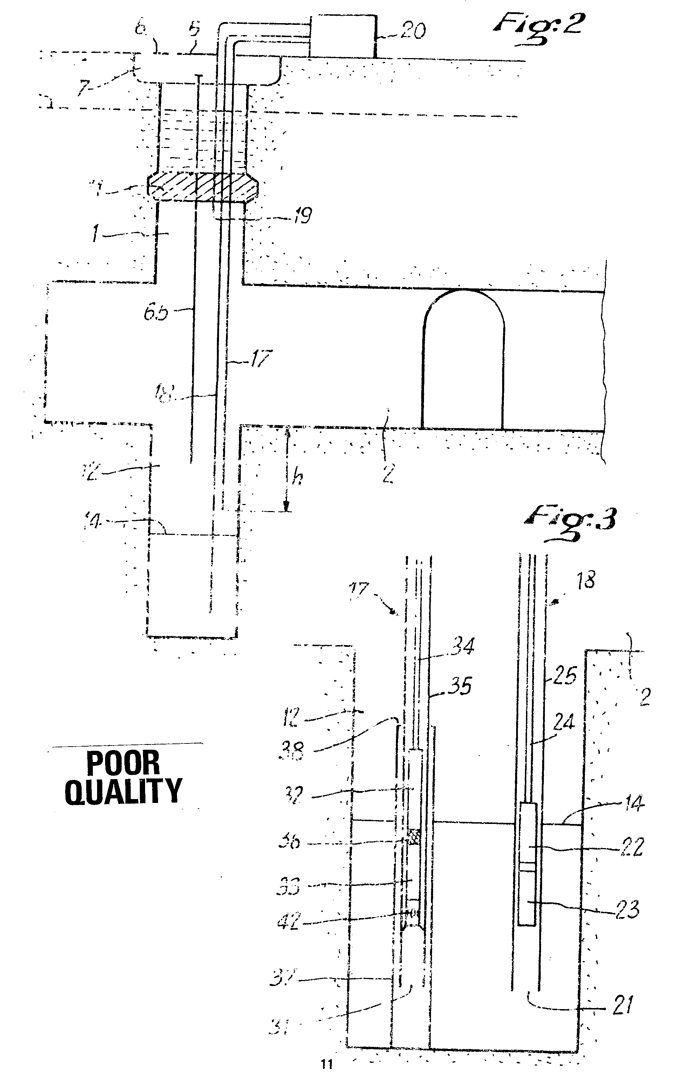

Le stockage selon l'invention représenté sur la figure 2 présente dans son aspect d'ensemble deux différence importantes avec le stockage classique représenté sur la figure 1. Sur la figure 2, on voit la cave de sécurité 7, avec la trappe de visite 6. En outre, l'extrêmité inférieure du tube 17 d'aspiration de propane est placée plus bas, à une hauteur h du fond de la galerie 2. Cette hauteur est telle que le volume de puisard entre le bas du tube 17 et le fond de la galerie, h · S (S = section du puisard) soit supérieur au volume d'eau des colonnes d'eau en équilibre hydrostatique dans les tubes: H · s (H = hauteur hydrostatique correspondant à la pression du stockage, s = section des tubes)

$$h \cdot S > H \cdot s$$

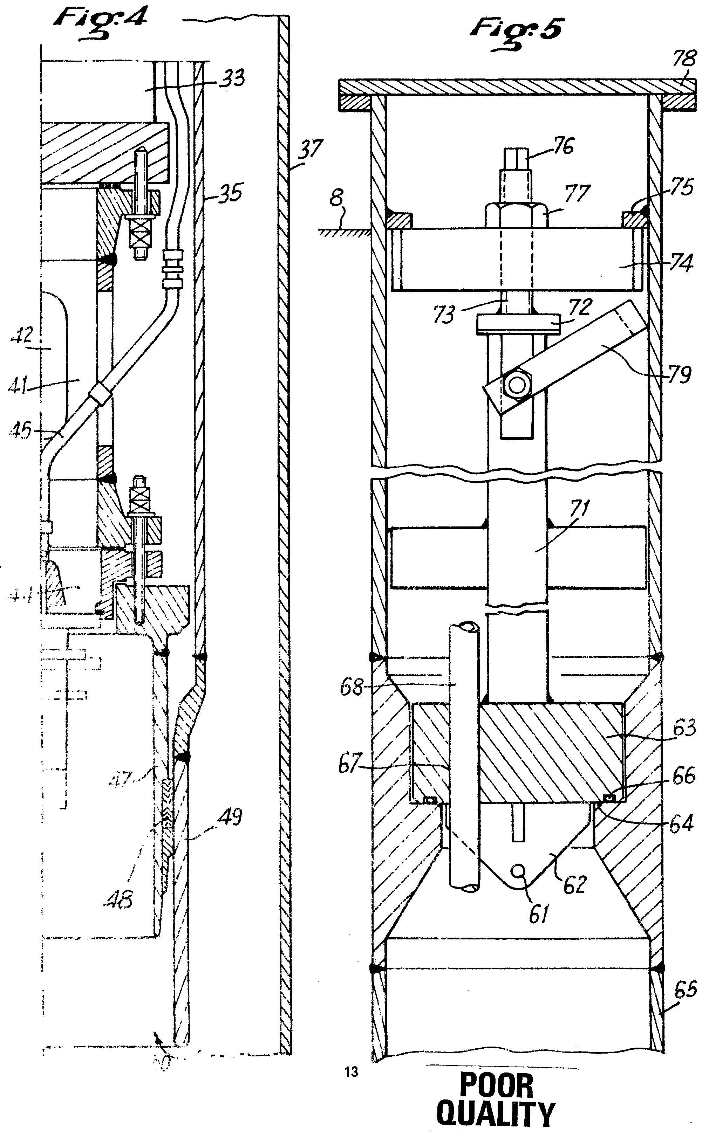

La figure 3 représente schématiquement le puisard 12 qui peut avoir par exemple vingt mètres de profondeur environ. Pour la bonne marche de l'installation, l'interface 14 de séparation de l'eau (en bas), et du produit stocké au-dessus doit se trouver dans ce puisard entre deux limites choisies. On a représenté une aspiration d'eau 18 et une aspiration d'hydrocarbure 17. Pour des raisons de sécurité ou de procédé, ces liaisons peuvent être doublées ou triplées ou plus, sans qu'il soit nécessaire de les représenter toutes. D'autres tubes peuvent descendre dans le puisard, tels que le tube de remplissage et les fourreaux des sondes de température de niveau ou d'alarmes. L'ouverture 21 de l'aspiration des pompes d'eau est située au voisinage du fond, par exemple à un ou deux mètres du fond. Une pompe 22, mûe par un moteur 23 est placée au-dessus de l'ouverture et débite dans le tube de refoulement 24, support du groupe moto pompe, placé dans le fourreau 25 (casing); ce fourreau abrite en outre les accessoires de fourniture d'énergie et d'asservissement du moteur de la pompe. La pompe est mobile verticalement dans le fourreau et est suspendue au tube 24.

L'ouverture 31 de l'aspiration des pompes d'hydrocarbure est également placée à peu de distance du fond du puisard. La pompe d'hydrocarbure 32 est entraînée par le moteur 33, aspire l'hydrocarbure à travers la crépine 36, et débite dans le tube de refoulement 34 et support du groupe moto pompe, logé dans le fourreau 35. L'ensemble d'aspiration d'hydrocarbure liquide est placé dans un pot d'aspiration 37 s'étendant depuis le fond du puisard, ce pot étant étanche à sa partie inférieure, jusqu'à un niveau supérieur 38 situé à une distance h du fond de la galerie 2 déterminée de la façon indiquée ci-dessus. De même, la pompe 32, avec le moteur 33, est mobile verticalement dans le fourreau 35 et est suspendue au tube 34.

Dans ces conditions, le niveau de séparation 14 de l'hydrocarbure liquide et de l'eau devra rester entre le bord supérieur 38 du pot d'aspiration et l'ouverture 21 d'aspiration d'eau. Comme l'eau s'écoule en permanence vers le puisard, le niveau 14 a tendance à monter. On réglera alors le fonctionnement des pompes d'eau de façon à maintenir le niveau 14 entre l'ouverture 21 et le bord 38. Le contrôle du niveau peut être constitué par un système connu tel qu'un appareillage classique de détection de niveau qui agit automatiquement sur les relais d'arrêt-mise en route des pompes d'eau en fonction de seuils choisis.

Le bord supérieur 38 du pot d'aspiration est placé dans le puisard, en-dessous du niveau du radier de la galerie 2. Si, pour une raison quelconque, par exemple panne des pompes d'eau, le niveau 14 de l'eau dépasse le bord 38, le pot d'aspiration se remplit d'eau. Une alarme est déclenchée et il est prévu que les pompes de propane soient inhibées, par exemple au moyen d'un système appropriè au milieu.

Selon l'invention, on peut assurer la mise en sommeil de l'installation, c'est-à-dire l'arrêt des opérations de vidange (tout en permettant le stockage) dans des conditions de sécurité absolues. Pour ce faire, on fait monter le niveau de l'eau au-dessus du bord 38 du pot d'aspiration à une hauteur suffisante pour que le volume d'eau situé au-dessus du bord du pot soit supérieur au volume nécessaire au remplissage du fourreau sous l'effet de la pression du stockage, pour obtenir l'équilibre hydrostatique en cas de mise à l'atmosphère de ce fourreau. Ceci détermine la hauteur minimum h nécessaire entre le bord du pot 38 et le fond de la galerie 2, comme indiqué ci-dessus. On peut aussi, si on le désire, noyer les fourreaux en injectant de l'eau, ce qui ne demande donc que des volumes d'eau limités.

Des soupapes sont placées dans la cave de sécurité 7, en tête de différentes colonnes: évent, emplissage, réinjection, équilibre. Les colonnes des pompes d'eau d'exhaure et d'hydrocarbure sont prolongées hors de la cave pour permettre l'extraction des pompes. Les tubes d'extraction de produit (hydrocarbure) peuvent être avantageusement équipées de vannes de sécurité à l'extérieur de la cave; la partie inférieure de ces tubes, placée en-dessous des pompes de produit, du côté aspiration (succion) de la pompe, sont obligatoirement équipées de vannes de sécurité au pied du tube de façon à pouvoir obturer les jonctions. Les tubes de liaisons d'équilibre du gaz ou d'entrée du produit sont munis de vannes de sécurité logées dans la cave.

La figure 4 représente l'aspiration d'une pompe de produit (hydrocarbure). Le fourreau 35 est disposé à l'intérieur du pot d'aspiration 37. Le moteur électrique 33, avec au-dessus une crépine d'aspiration et la pompe (non représentée), est suspendu par le tube de refoulement 34. Sous le moteur est prévu, conformément à l'invention, un ensemble comprenant:

1) une partie tubulaire 41 avec des lumières 42;
2) une vanne de sécurité 44, dont l'obturateur est rappelé vers le haut contre le siège de soupape par un ressort (non représenté, cette vanne étant classique, du type »Fail safe«), l'ouverture est assurée par un flexible 45 disposé dans le fourreau, à l'extérieur du tube de refoulement;
3) une jupe 47 garnie à l'extérieur d'un joint d'étanchéïté 48, ce joint permettant d'assurer l'étanchéïté avec le prolongement inférieur 49 du fourreau, ce prolongement étant de diamètre légèrement plus faible que le fourreau lui-même. Il est ainsi possible de relever le dispositif de sécurité et de le remonter à l'intérieur du fourreau, pour entretien, réparation et remplacement, et de rétablir l'étanchéïté à la fin de l'opération de descente, quand la jupe 47 vient s'engager dans le prolongement 49.

En fonctionnement, le produit, par exemple le propane liquide descend dans le pot 37, entre la paroi du pot et la paroi du fourreau, suit le trajet de la flèche 50 en contournant le bas de la jupe, remonte dans celle-ci, traverse le robinet de sécurité quand celui-ci est ouvert (position en pointillé), sort par les lumières 42 et remonte le long du moteur jusqu'à crépine d'aspiration.

La figure 5 représente un dispositif d'étanchéïté pour tête de tube de sonde. Les précautions prises sur les tubes des pompes seraient inopérantes si une fuite importante risquait de se produire par un autre tube, tel qu'un tube de sonde. Conformément à l'invention, il est prévu des étanchéïtés spéciales pour les tubes dans lesquels sont passées les différentes sondes.

Dans l'exemple représenté, la sonde est suspendue à un câble accroché à l'oeil 61, percé dans une oreille 62 fixée par exemple par soudure à un bouchon 63 reposant sur un épaulement interne 64 du tube 65 de la sonde. Ce tube traverse le bouchon en béton 11 (figure 2). Avantageusement, la face inférieure du bouchon 63 comporte une gorge dans laquelle est placé un joint torique 66. Le bouchon est percé d'un alésage 67 dans lequel passe le câble 68 de la sonde. Le diamètre de l'alésage est prévu pour avoir une étanchéité suffisante quand le câble est en position.

Pour que le bouchon 63 ne soit pas soulevé par la pression du stockage d'hydrocarbure, il est maintenu appliqué contre l'épaulement 64 par les moyens suivants. Le bouchon est solidaire d'une tige axiale 71 sur laquelle vient appuyer la tête 72 d'un boulon 73, vissé dans une barrette 74 prenant appui vers le haut contre un collier 75 fixé par exemple par soudure contre la paroi interne du tube 65. La mise en place de la barrette est facilitée si le collier 75 ne s'étend pas sur toute la périphérie, mais est interrompu sur deux secteurs opposés plus larges que la barrette. On peut agir sur le boulon 73 par exemple au moyen d'une clef sur une tête carrée 76, prévue à son extrémité, et un contre-écrou 77 permet d'assurer un blocage. Le tube peut être obturé en haut par un chapeau 78, situé dans la cave de sécurité 7, à distance convenable du plancher 8 de celle-ci. Une manille 79 permet de remonter le bouchon 63 quand la barrette est dégagée. Pour cela, après avoir desserré le contre-écrou 77, on tourne la tête carrée 76 dans le sens convenable pour desserrer l'appui de la barrette 74 contre les segments de collier 75, on fait ensuite pivoter la barrette de 90° pour pouvoir la dégager, puis on enlève la barrette avec le boulon 73. On enlève ensuite le bouchon 63 en accrochant la manille 79 et l'on peut ainsi remonter la sonde par le câble de suspension. Pour la mise en place, on effectue les opérations en sens inverse.

Le dispositif est particulièrement simple, donc peu exposé aux pannes et aux accidents. L'étanchéité est particulièrement efficace. Pour la sécurité, le bas du tube débouche dans le fond du puisard, dans la partie normalement occupée par de l'eau, de sorte qu'en cas de rupture ou de destruction du dispositif ci-dessus, la remontée de l'eau dans le tube aboutissant à l'équilibre hydrostatique empêche toute fuite d'hydrocarbure. Cette condition est ainsi réalisée pour tous les tubes de diamètre notable, ce qui empêche toute éruption.

## Revendications

1. Procédé pour assurer la sécurité d'un stockage d'un fluide sous pression tel qu'un hydrocarbure gazeux liquéfié à la pression d'équilibre à température ambiante dans une cavité souterraine (2) prévue pour comporter en exploitation normale, à partir du fond, une couche d'eau, une couche de produit liquide et une couche supérieure de gaz, le stockage étant exploité à partir d'un niveau situé au-dessus du stockage au moyen de tubes pénétrant dans le stockage, caractérisé en ce que l'on isole le stockage par fermeture de tout tube (17, 18, 65) pénétrant dans une phase liquide par remplissage d'eau jusqu'au niveau d'équilibre hydrostatique.

2. Procédé selon la revendication 1, caractérisé en ce que l'on amène le niveau de l'eau dans le fond du stockage au-dessus des ouvertures inférieures des tubes, à une hauteur suffisante pour permettre le remplissage des tubes par refoulement de l'eau sous l'effet de la pression dans le stockage.

3. Dispositif de stockage souterrain pour un produit fluide sous pression comportant une cavité souterraine (2) avec un puisard (12) à la partie inférieure de ladite cavité et des tubes d'exploitation (17, 18) établissant des communications entre la cavité et un niveau supérieur au plafond de celle-ci, les extrémités inférieures des tubes débouchant dans le puisard, caractérisé en ce que le volume de la partie du puisard située au-dessus des extrémités inférieures (38) des tubes est supérieur au volume des tubes compris entre les extrémités inférieures et le niveau d'équilibre hydrostatique pour la pression prévue dans le stockage.

4. Dispositif selon la revendication 3, caractérisé en ce que le tube d'extraction (17) du produit liquide débouche dans un pot (37) ouvert en haut et fermé en bas, de façon à aspirer le produit tant que le niveau de l'eau n'atteint pas le bord supérieur (38) du pot.

5. Dispositif selon la revendication 3, dans lequel le tube d'extraction (17) du produit est constituée par un groupe moto pompe (33) suspendu à son tube de refoulement (34) au fond du stockage, l'ensemble étant placé dans un fourreau (35) s'étendant depuis le haut du stockage jusqu'au niveau de l'embouchure d'aspiration, caractérisé en ce que l'embouchure d'aspiration (31) comporte des moyens (48) pour assurer l'étanchéité entre l'aspiration et le bas (49) du fourreau, au moins en position de fonctionnement normal.

6. Dispositif selon la revendication 4, caractérisé en ce que la partie inférieure (49) du fourreau est rétrécie, et que l'aspiration du groupe moto pompe comporte une jupe (47) avec un dispositif (48) assurant l'étanchéité entre la partie rétrécie du fourreau, et la jupe, en position de fonctionnement normal.

7. Dispositif selon la revendication 5, caractérisé en ce qu'il comporte en outre des tubes (19) équilibre de gaz, qui débouchent au-dessus du niveau du liquide, des tubes d'emplissage du stockage qui peuvent ou non plonger dans le puisard, et des tubes (65) d'instrumentation ou d'asservissement du stockage, ces différents tubes étant équipés en tête du stockage de vannes de sécurité, avantageusement du type à clapet, le clapet étant rappelé vers le haut contre son siège sous l'effet d'un ressort, ainsi que de la pression dans le stockage.

8. Dispositif selon la revendication 7, caractérisé en ce que les vannes de sécurité sont placées dans une cave de sécurité (7) placée sous le niveau du sol, en tête du puits du stockage, dont l'accès ne peut être réalisé qu'au moyen d'engins lourds.

9. Dispositif selon la revendication 8, caractérisé en ce que les tubes des pompes de produits traversent la cave de sécurité (7) jusqu'à l'extérieur, que des vannes de sécurité sont placées au refoulement à l'extérieur de la cave, et que ces tubes comportent une vanne de sécurité (44) à leur extrémité inférieure.

10. Dispositif selon la revendication 3, caractérisé en ce que les dispositifs de contrôle de stockage sont soit complètement fermés et inaccessibles, soit munis d'un dispositif d'étanchéité comportant un bouchon verrouillable (63) disposé dans la cave de sécurité (7).

11. Dispositif selon la revendication 8, caractérisé en ce que des moyens d'avertissement sont déclenchables par le dégagement de l'ouverture d'accès (6) à la cave de sécurité (7).

12. Dispositif selon la revendication 3, comportant un tube d'évent (19) débouchant dans la partie haute du stockage, caractérisé en ce que ce tube d'évent est connecté à une vanne de régulation, de façon qu'elle s'ouvre si la pression dans le stockage dépasse une valeur préréglée, des moyens étant prévus pour comprimer le gaz libéré, le refroidir, éventuellement le liquéfier et le réinjecter au fond du stockage.

## Patentansprüche

1. Verfahren zur Gewährleistung der Sicherheit eines Lagers einer unter Druck stehenden Flüssigkeit, wie eines verflüssigten gasförmigen Kohlenwasserstoffes unter dem Gleichgewichtsdruck bei Umgebungstemperatur in einem unterirdischen Hohlraum (2), der zur Ermöglichung einer normalen Förderung vom Boden her eine Schicht Wasser, eine Schicht flüssigen Produkts und eine darüberliegende Gasschicht aufweist, wobei aus dem Lager, ausgehend von einem oberhalb desselben gelegenen Niveau, mit Hilfe von in das Lager reichenden Rohren gefördert wird, dadurch gekennzeichnet, daß man das Lager durch Verschluß aller in eine flüssige Phase ragenden Rohre (17, 18, 65) durch Anfüllen mit Wasser bis zum Niveau des hydrostatischen Gleichgewichts abisoliert.

2. Verfahren nach Anspruch 1, dadurch gekennzeichnet, daß man das Wasserniveau am Boden des Lagers oberhalb der unteren Rohröffnungen auf eine Höhe bringt, die zur Füllung der Rohre durch Wasseraufstieg unter der Wirkung des Lagerdrucks ausreicht.

3. Unterirdische Lagereinrichtung für ein flüssiges Produkt unter Druck, die einen unterirdischen Hohlraum (2) mit einem Sumpf (12) am unteren Teil des genannten Hohlraumes und Förderungsrohre (17, 18) aufweist, die die Verbindung zwischen dem Hohlraum und einem oberhalb des Plafonds desselben gelegenen Niveau bilden, wobei die unteren Enden der Rohre in den Sumpf münden, dadurch gekennzeichnet, daß das Volumen des oberhalb der unteren Enden (38) der Rohre gelegenen Teiles des Sumpfs größer als das Volumen der Rohre zwischen den unteren Enden und dem Niveau des hydrostatischen Gleichgewichts für den im Lager vorgesehenen Druck ist.

4. Einrichtung nach Anspruch 3, dadurch gekennzeichnet, daß das Abzugsrohr (17) des flüssigen Produkts in einen oben offenen und unten geschlossenen Topf (37) mündet, so daß das Produkt angesaugt wird, wenn das Wasserniveau den oberen Rand (38) des Topfs nicht erreicht.

5. Einrichtung nach Anspruch 3, bei welcher das Abzugsrohr (17) des Produkts aus einem an seinem Steigrohr (34) am Lagerboden aufgehängten Motorpumpenaggregat (33) besteht, wobei die ganze Anordnung in einem Mantel (35) untergebracht ist, der sich von der Höhe des Lagers bis zum Niveau der Saugmündung erstreckt, dadurch gekennzeichnet, daß die Saugmündung (31) Mittel (48) zur sicheren Abdichtung zwischen dem Ansaugteil und dem Mantelunterteil (49) zumindest bei normaler Funktionsstellung aufweist.

6. Einrichtung nach Anspruch 4, dadurch gekennzeichnet, daß der untere Teil (49) des Mantels verengt ist und daß der Ansaugteil des Motorpumpenaggregats eine Schürze (47) mit einer Vorrichtung (48) aufweist, die die Abdichtung zwischen dem verengten Mantelteil und der Schürze bei normaler Funktionsstellung gewährleistet.

7. Einrichtung nach Anspruch 5, dadurch gekennzeichnet, daß sie außerdem Gasgleichgewichtsrohre (19), die oberhalb des Flüssigkeitsniveaus münden, Rohre zur Füllung des Lagers, die gegebenenfalls in den Sumpf münden, und Rohre (65) zur Instrumentierung und Bedienung des Lagers aufweist, wobei diese verschiedenen Rohre am Kopf des Lagers mit Sicherheitsventilen, vorzugsweise in Art einer Klappe, ausgestattet sind und die Klappe unter der Wirkung einer Feder ebenso wie durch den Lagerdruck nach oben gegen ihren Sitz zurückgedrückt wird.

8. Einrichtung nach Anspruch 7, dadurch gekennzeichnet, daß die Sicherheitsventile in einem unterhalb des Bodenniveaus am Kopf des Lagerschachts liegenden Sicherheitskeller (7) angeordnet sind, dessen Zugang nur mit Hilfe schwerer Geräte möglich ist.

9. Einrichtung nach Anspruch 8, dadurch gekennzeichnet, daß die Pumpenrohre des Produkts den Sicherheitskeller (7) bis nach außen durchqueren, daß die Sicherheitsventile zum Auslaß nach außerhalb des Kellers angeordnet sind und daß diese Rohre an ihrem unteren Ende ein Sicherheitsventil (44) aufweisen.

10. Einrichtung nach Anspruch 3, dadurch gekennzeichnet, daß die Lagerkontrolleinrichtungen entweder vollständig geschlossen und unzugänglich oder mit Abdichteinrichtungen ausgerüstet sind, die einen in dem Sicherheitskeller (7) vorgesehenen Verriegelungsstopfen (63) aufweisen.

11. Einrichtung nach Anspruch 8, dadurch gekennzeichnet, daß Warneinrichtungen durch das Lockern der Zugangsöffnung (6) des Sicherheitskellers (7) ausgelöst werden.

12. Einrichtung nach Anspruch 3, die ein Lüftungsrohr (19) aufweist, das in den oberen Lagerbereich mündet, dadurch gekennzeichnet, daß dieses Lüftungsrohr mit einem Regulierventil so verbunden ist, daß es sich öffnet, wenn der Lagerdruck einen vorher eingestellten Wert überschreitet, wobei Mittel zur Komprimierung des in Freiheit gesetzten Gases, zu seiner Kühlung, gegebenenfalls zu seiner Verflüssigung und Wiedereinleitung in den Boden des Lagers vorgesehen sind.

## Claims

1. A method of ensuring safety for a store of pressurized fluid such as a liquefied gaseous hydrocarbon stored at its equilibrium pressure at ambient temperature in an underground cavity (2) which is intended, in normal operation, to include from the bottom upwards, a layer of water, a layer of liquid product, and a top layer of gas, the store being operated from a level situated above the store by means of tubes which penetrate into the store, the method being characterized in that the store is isolated by closing all tubes (17, 18, 65) that penetrate into a liquid phase by filling with water up to the hydrostatic equilibrium level.

2. A method according to claim 1, characterized in that the level of the water in the bottom of the store is brought above the bottom openings of the tubes to a sufficient depth to enable the tubes to be filled by the water being driven into the tubes under the effect of pressure in the store.

3. An underground store for a fluid product under pressure, the store comprising an underground cavity (2) having a sump (12) in the bottom thereof and operating tubes (17, 18) establishing communication between the cavity and a level above the ceiling thereof, the bottom ends of the tubes opening out in the sump, the underground store being characterized in that the volume of the portion of the sump situated above the bottom ends (38) of the tubes is greater than the volume of the tubes between their bottom ends and the hydrostatic equilibrium level for the intended pressure in the store.

4. A store according to claim 3, characterized in that the tube (17) for extracting the liquid product opens out in pot (37) which is open at the top and closed at the bottom in such a manner as to suck in product so long as the water level does not rise to the top edge (38) of the pot.

5. A store according to claim 3, in which the tube (17) for extracting the product is constituted by a motor-pump group (33) suspended from its discharge tube (34) at the bottom of the store, the assembly being placed in a sheath (35) extending from the top of the store down to the level of the suction inlet, and characterized in that the suction inlet (31) includes means (48) for providing sealing between the suction inlet and the bottom (49) of the sheath, at least in the normal operating position.

6. A store according to claim 4, characterized in that the bottom portion (49) of the sheath narrows down, and in that the suction inlet of the motor-pump group includes a skirt (47) with a device (48) for providing sealing, in the normal operating position, between the narrowed down portion of the sheath and the skirt.

7. A store according to claim 5, characterized in that it further includes gas equilibrium tubes (19) which open out above the level of the liquid, store-filling tubes which may or may not descend into the sump, and instrumentation or storecontrolling tubes (65), these various tubes being equipped at the store head with safety valves, advantageously non-return valves each having a valve plate urged upwardly against its seat both by the effect of a spring and by the pressure in the store.

8. A store according to claim 7, characterized in that the safety valves are located in a safety cellar (7) located below ground level at the head of the store and to which access may be obtained only by using heavy equipment.

9. A store according to claim 8, characterized in that the product pumping tubes pass through the safety cellar (7) to the outside, in that safety valves are located at their discharge out from the cellar, and in that each of these tubes includes a safety valve (44) at its bottom end.

10. A store according to claim 3, characterized in that the store monitoring devices are either completely enclosed and inaccessible, or else are provided with a sealing device including a lockable stopper (63) disposed in the safety cellar (7).

11. A store according to claim 8, characterized in that control means are triggerable by opening the access (6) to the safety cellar (7).

12. A store according to claim 3, including a vent tube (19) opening out into the top of the store and characterized in that the vent tube is connected to a regulator valve in such a manner that it opens if the pressure in the store exceeds a preset value, means being provided for compressing the vented gas, for cooling it, possibly for liquefying it, and for reinjecting it into the bottom of the store.

Fig. 1

POOR
QUALITY

0 013 854

*Fig.2*

*Fig.3*

**POOR QUALITY**

Fig. 4

Fig. 5